(19) Europäisches Patentamt
European Patent Office
Office européen des brevets

(11) **EP 1 461 776 B1**

(12) **EUROPEAN PATENT SPECIFICATION**

(45) Date of publication and mention
of the grant of the patent:
**01.03.2017 Bulletin 2017/09**

(51) Int Cl.:
***G06T 15/20*** *(2011.01)*    ***G06T 15/00*** *(2011.01)*
***G06T 11/40*** *(2006.01)*

(21) Application number: **02804951.8**

(22) Date of filing: **12.12.2002**

(86) International application number:
**PCT/GB2002/005458**

(87) International publication number:
**WO 2003/052698 (26.06.2003 Gazette 2003/26)**

(54) **TEXTURING METHOD AND APPARATUS**

TEXTURIERUNGSVERFAHREN UND -VORRICHTUNG

PROCEDE ET APPAREIL DE TEXTURATION

(84) Designated Contracting States:
**DE FR**

(30) Priority: **14.12.2001 GB 0129966**

(43) Date of publication of application:
**29.09.2004 Bulletin 2004/40**

(73) Proprietor: **Imagination Technologies Limited
Kings Langley,
Hertfordshire WD4 8LZ (GB)**

(72) Inventor: **BERGLASS, Morrie
London NW5 2DR (GB)**

(74) Representative: **Slingsby Partners LLP
1 Kingsway
London WC2B 6AN (GB)**

(56) References cited:
**EP-A- 0 725 365     EP-A- 0 725 366
EP-A- 0 890 925     US-A- 5 586 234
US-A- 6 025 853     US-B1- 6 230 177**

## Description

This invention relates to 3-dimensional computer graphic systems of the type which enable texturing and/or blending operations to be performed on objects being rendered.

An example of a 3-dimensional graphic system is described in our European patent application serial number EP-A1-0 725 365.

This describes an apparatus and method for determining which surfaces of objects in an image to be rendered are visible at each pixel in the image.

Following determination of the objects visible at each pixel, texture data may be applied to the pixels. An example of how this is done is described in our British patent application number GB-A-2 297 886.

This describes a texturing system in which an image to be textured is subdivided into a plurality of rectangular tiles. Then, for each tile in turn, texturing of the pixels in the tile is performed. Also, blending operations can be performed with translucent surfaces.

A similar tile-based texturing system is disclosed in EP-A2-0 890 925. EP-A2-0 890 925 describes a computer system including a graphics accelerator for rendering primitives (triangles) to be textured, wherein the graphics accelerator is configured to perform texture mapping on a region corresponding to the size of one of the plurality of tiles.

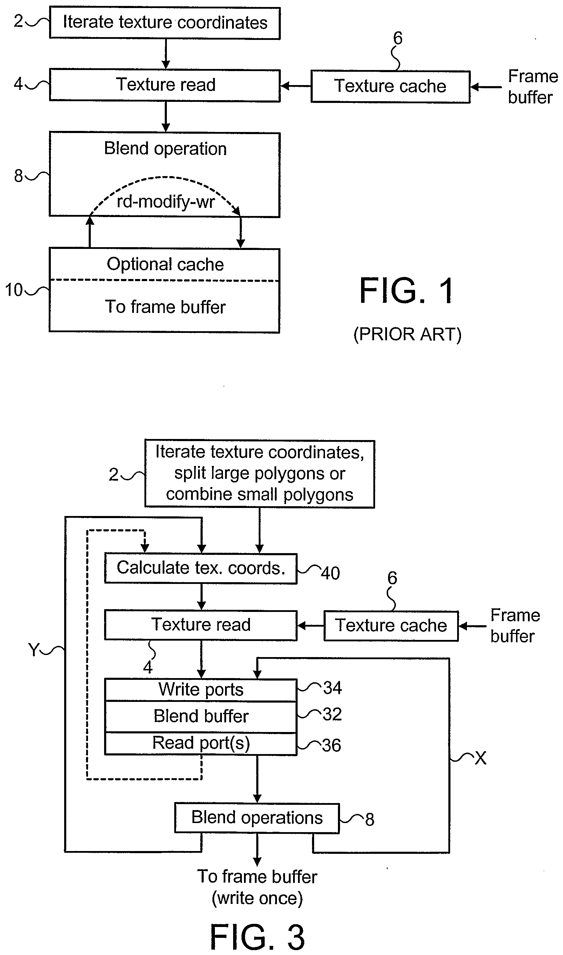

The type of system to which this form of texturing applies is shown in figure 1. This comprises a texture iteration unit 2 which determines the textures and polygons within a frame or a tile of a frame which are to be applied to the pixels in that frame or tile. The texture read unit 4 retrieves relevant texture data from a texture cache 6 and passes this to a blending unit 8. This takes pixels from a frame buffer 10 modifies them by applying the texture in a blending operation, and writes them back to the frame buffer. The reading from the frame buffer may be via an optional cache memory 12 which may contain only a single tile of frame buffer data at a time.

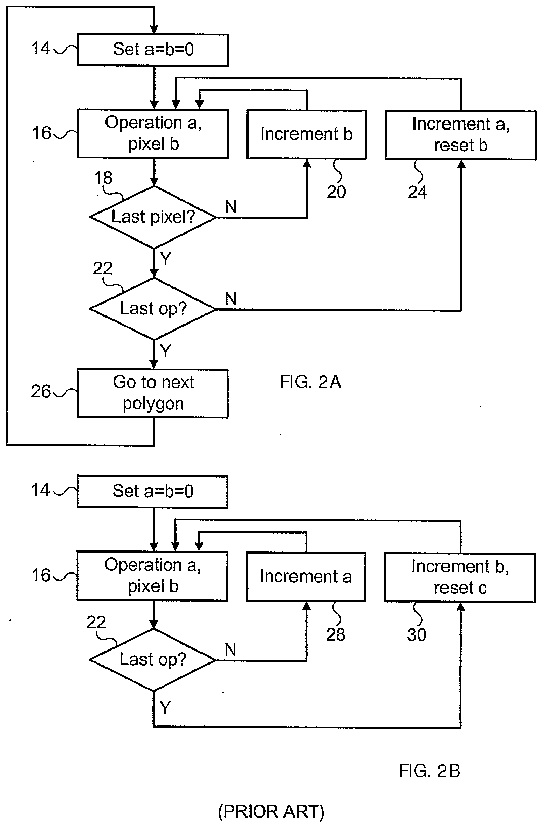

The process performed by this prior art system is usually performed in two main ways as shown in figure 2A and B. Figure 2A shows what is known as polygon walking whilst figure 2B shows an alternative to this.

Polygon walking refers to a system where pixels for a single texture and/or blending operation are walked through sequentially before proceeding to subsequent textures or blending operations for those pixels or a subset of those pixels. The flow of operation of this is illustrated in figure 2A. Two parameters are used. "a" is the number of texturing or blending operations to be performed and "b" is the number of pixels to be walked through. Initially a and b are set to 0 at step 14. The first in the list of operation is then applied to pixel b at step 16 and a determination as to whether or not this is the last pixel to which the operation is to be applied is determined at 18. If it is not, the pixel number b is incremented at 20 and flow returns to step 16 where operation a is performed on the new pixel b. When the last pixel is reached a determination is made at 22 as to whether or not the last operation in the list a has been performed. If it has not, the operation number a is incremented at 24 and the pixel number b is reset to 0. Flow then returns to step 16 and continues as described above. When the last operation a is reached, the system goes onto the next polygon to be rendered at step 26 and the system returns to step 14 where the operations a are set to 0 and the number of pixels b is set to 0.

The main advantage of polygon walking, i.e. processing one polygon at a time, is to reduce processing penalties due to data hazzards, such as where a texture read or blend operation depends on the result of a previous read or blend. The larger the sequence of pixels walked through, the more the latency penalty is absorbed. However, on very small polygons with, e.g. those with only one pixel, the walking system degenerates into a non-walking system.

A non-walking system is shown in figure 2B. Again this commences at step 14 where parameters a and b corresponding to operations and pixels are set to 0. At 16, the first operation a is performed on pixel b. A determination is then made at 22 as to whether or not this is the last of the operations in the list a. If it is not, a is incremented at 28 and the new operation a applied to pixel b at 16. This continues until a determination is made at 22 that the last operation has been performed. At this point, pixel number b is incremented and operation number a reset to 0 at 30 and flow then returns to step 16 where it continues as before.

The main advantage of this type of system is that very little storage for intermediate results is required since only one pixel is worked on at a time. In polygon walking a polygon could be as large as the entire render target, there may therefore need to be sufficient storage for all intermediate results for each pixel in the rendered target.

The present invention relates to a method and apparatus for performing texturing and blending operations as set out in the appended claims.

Preferred embodiments of the present invention are based on polygon walking type systems. They take advantage of the fact that pixel blending operations in hardware are becoming more and more flexible, thereby allowing storage for multiple, general purpose read/write registers for each pixel in the render target. Furthermore, the precision of these registers is increasing as is the number of registers available, and the render target size.

These developments cause problems which currently can only be solved by re-issuing texture reads and breaking complex blending operations into sequential passes. Both of these result in a loss of performance. There are also problems caused by pipeline latency on texture reads or blending operations which are dependent on the results of previous operations. The cost of storage is also a problem as the buffer or cache such as that shown at 12 in figure 1 is too large to fit on a typical graphic processing chip and leads to a performance penalty because of the limited bandwidth of the read modify write process with the cache 12 or frame buffer 10.

A specific embodiment of the present invention provides a pixel blending buffer on a graphics chip. It enables portions of a frame buffer or tile from a frame buffer to be accessed on a polygon by polygon basis. Large polygons are broken up so that they never exceed a predetermined size. Smaller polygons can be combined together to fill up the pixel blending buffer thereby improving the performance of the system.

Preferably, an embodiment of the invention enables multiple textures to be accessed simultaneously in a single blending operation.

Preferably, texture data can be reused, in random order, without having to re-issue texture read requests to texture memory.

Preferably, more textures than the number of physical registers provided on a chip can be supported.

Preferably_these features are implemented using a set of registers with multiple read and write ports which can be used and re-used indefinitely during the processing of a sequence of pixels, dependent on the number of textures and blending operations to be performed.

The invention is defined with more precision in the appended claims to which reference should now be made.

A specific embodiment of the invention will now be described in detail by way of example with reference to the accompanying drawings in which:

Figure 1 is the prior art system described above;
Figures 2A and 2B show the alternatives of polygon walking and not walking;
Figure 3 is a block diagram of a preferred embodiment of the invention;
Figure 4 shows the data structure of words in the blend buffer of figure 3;
Figure 5 shows graphically a trait that covers part of a tile to be rendered;
Figure 6 shows how iteration of pixels proceeds for three different signal blend buffers; and
Figure 7 is a clarification of the blend and texture units of figure 3.

The block diagram of figure 3 is a modified version of a standard 3-D pixel pipeline of the type shown in figure 1. At the heart of the system is a blend buffer 32 which is accessed via write ports 34 and provides data output via read ports 36.

A texture iteration unit 2 as in figure 1 provides texture coordinates to the system. It does this via a further texture calculator unit 40 which receives data in a feedback loop from the blend operations unit 8.

The blend buffer 32 with its read and write ports sits between the texture read unit 4 and the blend operations unit 8. By using the blend buffer 32, it is not necessary for the blend operation unit 8 to perform a read-modify-write on the frame buffer. Thus, blend operations can be performed as many times as desired on the data held in the blend buffer using feedback loop X which takes data directly from the blend buffer 8 to the write ports 34.

The blend buffer stores a set of words in registers, where each word has a unique sequential address as would be the case with a standard storage array. Each word in the blend buffer stores the following fields:

1. The X,Y location of a pixel in the render target (the frame buffer or a tile of the frame buffer).
2. q, the number of pixels being processed simultaneously by the hardware pipeline.
3. M, the number of registers each pixel has access to, wherein each register is made up of the following fields:

alpha/Q channel comprising $K_M$ bits
red/U channel comprising $K_M$ bits
green/V channel comprising $K_M$ bits
blue/W channel comprising $K_M$ bits

The value of q given above defines how many pixels are processed simultaneously by the hardware pipeline. The value of M defines the number of registers each pixel has access to, for example, for each register in M, the four channels have their own precision defined by $K_M$. A designer can use a value of $K_M$ of 8 for read only iterated diffuse operations and specular colours and values for $K_M$ of 16 for general purpose read/write registers.

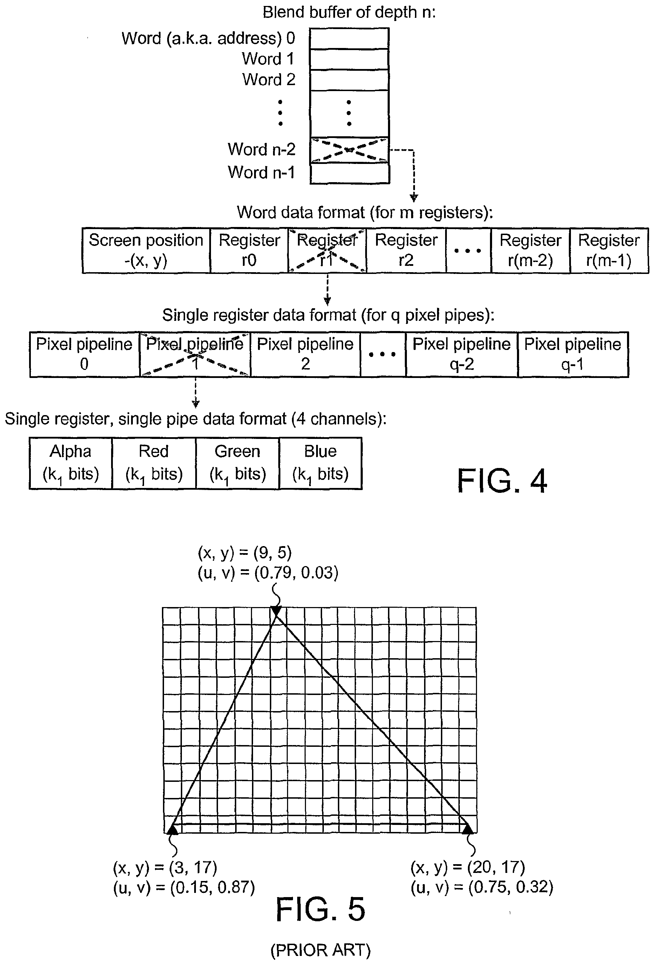

The depth of the blend buffer is defined as n, and this is shown in figure 4 with addresses ranging from 0 to n-1. Thus, n is the maximum number of pixels which can be processed at once, although its value is arbitrary and is selected at the hardware design stage. Choosing a larger value of n leads to additional storage being required on the graphics chip. However, a larger value of n increases performance as more pixels can be processed at once. A smaller value of n will result in a smaller on chip blend buffer, but data hazards will cause performance reduction. The other quantities, m, q, and k are fixed by constraints in other parts of the graphics system or by external specifications.

A common optimisation is to replicate the hardware for a single pixel pipeline and run these in parallel. Thus multiple pixels perform steps 16, 18, and 20 per clock, but all these pixels still share the same index b. The number of parallel pixel pipelines is defined as the value q in figure 4.

Since *q* pixels share the same index b they also share the same word in the blend buffer. This is why each address in the blend buffer supports *q* sets of pixel data, as shown in figure 4.

Figure 4 shows that the data bus width of the blend buffer is expressed as (let sps be the number of bits required to encode the (x, y) screen position):

$$sps + m\chi \sum_{i=0}^{q-1} 4k_i$$

In figure 3, the read and write ports have access to the blend buffer shown in figure 4. The blend buffer supports individual register read/write enables and read/write addresses so that multiple ports can use the blend buffer without arbitration if they are accessing different registers.

If two write ports wish to update the same register at different addresses, then arbitration is required. In this design the texture lookup unit always has write priority over the texture blending unit. Since this proposal only has a single read port, no read arbitration is required. When a read access is performed for address b, the read word contains the data for all parallel pipes which allows simultaneous execution of the parallel pipelines.

Typically, the value of n will be less than the render target size. For example, the render target might be a tile of 64x64 pixels with n being a total of 64 words. Larger polygons will have pixel sequences which require more than n words to process them. This will be the case with large polygons which need to be broken into smaller sequences equal to or less than n. Although there is a performance cost associated with splitting a sequence this will happen only on relatively long sequences. This splitting of large polygons is performed by the texture iteration unit 2 of figure 3. Iteration in 3-D graphics pipelines, is the process where data such as (u, V) texture coordinates for the three vertices of a triangle are used, in conjunction with the three (x, y) screen coordinates of the three vertices, to determine (u, v) values for each pixel covered by that triangle. This is shown in figure 5.

In the polygon-walking method used by this design the iterator goes through the pixels in a defined order and linearly interpolates the (u,v) values for each pixel sequentially, e.g. linearly interpolates proper (u, v) values for all pixels contained by the triangle (such as the one pointed to by reference numeral 5 where (x, y) = (13, 14). If there are multiple parallel pixel pipelines then multiple (u, v) values for adjacent pixels are iterated per clock.

This implementation has the added ability for the whole triangle to be iterated multiple times (in fact a times as shown in figure 2A). In this case the triangle will not only have (x, y) and (u, v) data, but in fact it will support (x, y) and many sets of (u, V) data which can be iterated during sequential passes of the triangle.

As (u, v) data is iterated, the results are used in the texture read unit 4 to sample a texture whose results are written into the blend buffer in sequential addresses, starting from 0 at the beginning of the triangle.

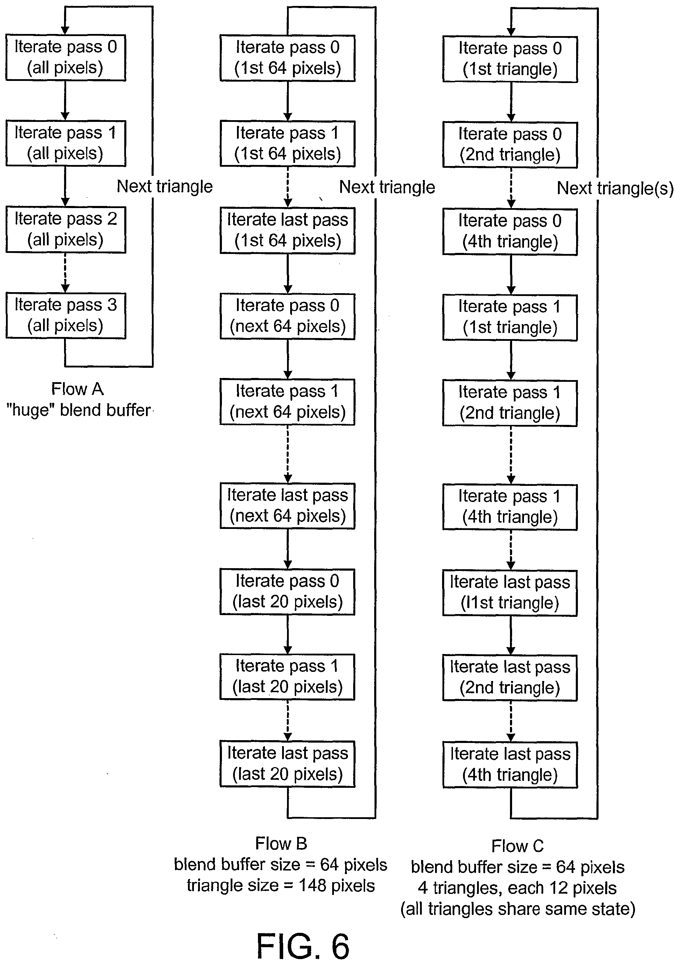

The implementation requires special processing if the number of pixels in the triangle would cause the blend buffer to overflow if the entire triangle were iterated during a single pass. This is solved as shown in Figure 6. Flow 6A shows an example of how processing would operate if the blend buffer was large enough to accommodate the largest possible triangle. Flow 6B shows what would happen if the blend buffer could hold 64 pixels and the triangle's size is 148 pixels. Flow 6C shows what would happen if the blend buffer would hold 64 pixels and there are 4 triangles each 12 pixels in size which share the same state.

In figure 3, once texture co-ordinates have been iterated and large polygons split or small polygons combined, the texture coordinates required are calculated at 40 and then read from the texture cache 6 by a texture read unit 4 in the same manner as shown in figure 1.

The texture coordinate calculation unit 40 can make modifications to the iterated texture coordinates produced by the iterator unit 2.

In the general case, no modifications are made and the texture coordinates are used exactly as iterated. However, the end user has control over some modifications to the texture coordinates prior to (or even instead of) texture reads. This modification is sometimes called perturbation.

The texture is then supplied to the blend buffer 32 via the write ports 34. The blend buffer and blend operation unit 8 then perform polygon walking of the type described in relation to figure 2A for all the pixels 0 to N stored in the blend buffer for the current set of textures via feedback loop X. Once all the operations have been performed for all of the polygons relevant to the pixels currently stored in the blend buffer the current contents of the pixel data in the blend buffer are written to the frame buffer 10 in a single operation. The addresses to which the data is written is dependent on the X,Y location data stored in the blend buffer. It will be appreciated, that the X,Y locations stored in each word from 0 to n-1 are not necessarily sequential. It will usually be the case that they are sequential where a large polygon has been broken up for processing. However, where smaller polygons are being combined and processed simultaneously the addresses will not be sequential. Thus the write into the frame buffer is a random write. It is a write once operation and not a multiple read-modify-write processor of the type shown in figure 1. The next set of pixels and textures are then sent into the blend buffer with the feedback loop X. Once all the operations for a polygon (a triangle) are complete and the texture pixel data has been written to the frame buffer all in one go, the contents of the blending buffer are reset or invalidated. The polygon then begins to be textured with a cleared blend buffer as it starts to fill up via the texture read unit 4 of figure 3. The process of invalidating the blend buffer is accomplished by negating all the valid flags located in the control unit. The negating valid flags for the registers in the blend buffer occurs during the last blend operation "a" which accesses the register by a read port 36. Therefore, by the time the very last blend operation "a" is complete, all the valid flags will be negated, indicating that the blend buffer is cleared for a new polygon or triangle.

Providing the value of n is sensibly chosen the blend buffer 32 can be provided on a graphics chip thereby giving significant performance gains. This is because when blending operations require multiple register read and writes they do not have to access the relatively slow external frame buffer, which is of course far too large to store on chip, even when a cache 12 of the type shown in figure 1 is used to store the contents of the particular tile currently under consideration.

The read and write ports 34 and 36 in figure 3 includes a hardware semaphore mechanism as a separate, contained, control unit. The semaphore solves three problems. Firstly, the semaphore block's (a.k.a stalls) write ports try to overwrite valid data located inside the blend buffer. Secondly, the semaphore block's (stalls)read ports try to read invalid data from the buffer. Thirdly, the semaphore blocks (stalls) write ports try to write to a register for which they do not have write-ownership.

All this is accomplished with two flag-sets in the semaphore unit: a set of valid flags and a set of write-ownership flags. For a system with two write ports (one from texture read and one from the blending unit) and one read port (from the blending unit), there is one valid flag associated with each register and with each word in the blend buffer. For example, a blend buffer with 32 locations, each with six registers would have 32 x 6 (192) flags. There is only one write-ownership flag per register, so in the previous example there would be only six write-ownership flags.

Each flag has a set condition and a clear condition. In some cases these conditions are based on the operation, as described by the end user, currently being performed. In other words the system relies partially on the end user to determine when the flags are to toggle.

*Valid set* When a successful write access occurs to the given register at the given blend buffer write address

*valid clear* For the given blend buffer read address and for each read register, after a successful read access occurs if the current operation (defined by the end user) indicates the valid flag should be cleared

*Write-ownership flag* When the last successful write access to a register occurs for an operation in the triangle, the write-ownership is swapped if the end user indicates it should for this operation

With the two resources: valid flags and write-ownership flags defined above, it becomes easy to implement the three semaphore mechanisms.

*Write port block* When writing to a register whose valid bit is set for the current blend buffer write address or when writing to a register and write-ownership is not granted

*read port block* When reading a register whose valid bit is not set for the current blend buffer read address

A secondary usage of the semaphore unit permits the texture read unit 4 and blending unit to write and rewrite registers (i.e reuse registers), an exceptionally useful feature. For example:

Texture read unit writes r0
Blending unit uses r0 in a calculation
Texture unit writes to r0 again
Blending unit uses new r0 in a calculation

In the above example the texture unit wrote to r0 twice.

The above implementation can be extended to support multiple read ports in addition to multiple write ports. To handle multiple read ports, each port needs its own set of valid flags. The condition to set the flags applies to all the read ports, but each read port individually controls when the flags are cleared by the end -user. A write port's flag will be stalled if any of the read port's valid flag is still set for the given register and write address.

The objects of these flags is to control the number of texture reads which have to be performed. This does not have to be equal to the number of blending operations. Nevertheless, the number of pixels in a polygon must remain the same for all texture reads and for all blending operations in that polygon.

The example of figure 3 shows a blend buffer 32 which has two write ports 34 and two read ports 36. In alternative implementations, multiple write ports can come from the results of the blending operations performed at 8. This would enable the processing of multiple blending operations simultaneously without having to walk through pixels one at a time as is the case with a system corresponding to figure 2A. This would lead to improvements in performance. Thus, division of multiple read and write ports and improved performance. Similarly, multiple read and write ports will enable multiple texture reads to incur simultaneously.

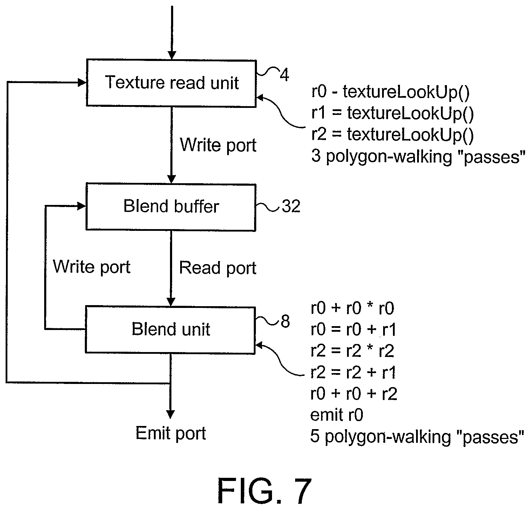

Each unit (texture read and blend) independently "walks the polygon" by the method shown in figure 2A. For both units, the number of operations (i.e. "passes"), *a*, may be different as shown in figure 7, however the number of pixels, *b*, is always exactly the same for both units for a given polygon (or a set of small state-sharing polygons).

## Claims

1. A method for performing texturing and blending operations on objects in a 3-dimensional computer graphics system comprising the steps of:

　　supplying pixel data for objects to be textured;
　　supplying texture data to apply to the pixels of the objects;
　　supplying object and texture data to a blend buffer;
　　applying the texture data to each pixel of each object that has access to it by blending the texture and object data in a blending processor; and
　　writing the resultant pixel data to a frame buffer;

**characterised in that**:

the step of supplying pixel data comprises the step of sub-dividing polygons representing objects in the image which would require a larger capacity than that of the blend buffer, and supplying data for more than one object simultaneously to the blend buffer for objects smaller than the blend buffer.

2. A method according to claim 1 in which texture data for a plurality of different textures is supplied to the blend buffer and subsequently applied to each pixel of each object that has access to it.

3. A method according to claim 1 or 2 in which the pixel data for objects to be textured comprises data derived from polygon data.

4. A method according to claim 3 in which the texture data is applied to each pixel of each object by polygon walking.

5. A method according to any preceding claim in which the step of writing to the frame buffer comprises a once only write for each pixel.

6. A method according to any preceding claim in which the step of supplying object data to the blend buffer comprises supplying data defining the location of each pixel in the blend buffer and the number of pixels to be processed simultaneously.

7. A method according to any preceding claim in which the step of supplying object data and texture data to the blend buffer includes supplying data defining the number of textures to which each pixel has access.

8. A method according to any preceding claim including the step of setting a flag to denote that a texture has been supplied to the blend buffer.

9. An apparatus for performing texturing and blending operations on objects in a 3-dimensional computer graphics system comprising:

a supply (2) for pixel data defining objects to be textured;
a supply (6) for texture data to be applied to the objects;
a blend buffer (32) to store the supplied pixel and texture data;
a blending processor (8) to apply the texture data to each pixel of each object that has access to it;

means to write the resultant pixel data to a frame buffer;
**characterised in that**:

the supply (2) for pixel data defining objects to be textured includes
means for subdividing polygons representing the objects which would require a larger capacity than that of the blend buffer, and means for supplying data for more than one object to the blend buffer for objects smaller than the blend buffer.

10. Apparatus according to claim 9 in which the blend buffer (32) and blending unit (8)are provided on an integrated circuit separate from the IC that includes the frame buffer.

11. Apparatus according to claim 9 or 10 in which the means for supplying texture data (6) supplies data for a plurality of different textures to the blend buffer (32) in a once only write.

12. Apparatus according to claim 9, 10 or 11 in which the pixel data for objects to be textured comprises data derived from polygon data.

13. Apparatus according to claim 12 in which the blending processor (8) applies the texture data to each pixel of each object by polygon walking.

14. Apparatus according to any of claims 9 to 13 in which the means to write the resultant pixel data to the frame buffer performs a once only write for each pixel.

15. Apparatus according to any of claim 9 to 14 in which the means (2) for supplying object data to the blend buffer (32) supplies data defining in the location of each pixel in the blend buffer and a number of pixels to be processed simultaneously.

16. Apparatus according to any of claims 9 to 15 in which the means for supplying object data and texture data to the blend buffer supplies data defining the number of textures to which each pixel has access.

17. Apparatus according to any of claims 9 to 16 including means for setting a flag to denote that a texture has been supplied to the blend buffer.

**Patentansprüche**

1. Verfahren zum Ausführen von Texturier- und Mischoperationen an Objekten in einem dreidimensionalen grafischen Datenverarbeitungssystem, das die Schritte umfasst:

Bereitstellen von Pixeldaten für zu texturierende Objekte; Bereitstellen von Texturdaten, die auf die Pixel der Objekte anzuwenden sind; Bereitstellen der Objekt- und Texturdaten an einen Mischpuffer;

Anwenden der Texturdaten auf jedes Pixel von jedem Objekt, das darauf Zugriff hat, durch Mischen der Textur- und Objektdaten in einem Mischprozessor; und

Schreiben der resultierenden Pixeldaten in einen Framepuffer;

**dadurch gekennzeichnet, dass**
der Schritt des Bereitstellens von Pixeldaten den Schritt des Aufteilens von Polygonen umfasst, die Objekte im Bild darstellen, welche eine größere Kapazität als die des Mischpuffers erfordern würden, und das Bereitstellen von Daten für mehr als ein Objekt gleichzeitig an den Mischpuffer für Objekte, die kleiner sind als der Mischpuffer.

2. Verfahren nach Anspruch 1, wobei Texturdaten für mehrere unterschiedliche Texturen an den Mischpuffer bereitgestellt und anschließend auf jedes Pixel jedes Objekts, das Zugriff darauf hat, angewandt werden.

3. Verfahren nach Anspruch 1 oder 2, wobei die Pixeldaten für zu texturierende Objekte Daten umfassen, die von Polygondaten abgeleitet sind.

4. Verfahren nach Anspruch 3, wobei die Texturdaten auf jedes Pixel jedes Objekts durch Polygonwandern angewandt werden.

5. Verfahren nach einem der vorstehenden Ansprüche, wobei der Schritt des Schreibens in den Framepuffer ein einmaliges Schreiben für jedes Pixel umfasst.

6. Verfahren nach einem der vorstehenden Ansprüche, wobei der Schritt des Bereitstellens von Objektdaten an den Mischpuffer das Bereitstellen von Daten umfasst, die den Ort jedes Pixels im Mischpuffer und die gleichzeitig zu verarbeitende Pixelanzahl definieren.

7. Verfahren nach einem der vorstehenden Ansprüche, wobei der Schritt des Bereitstellens von Objektdaten und Texturdaten an den Mischpuffer das Bereitstellen von Daten umfasst, welche die Anzahl an Texturen definieren, auf die jedes Pixel Zugriff hat.

8. Verfahren nach einem der vorstehenden Ansprüche, umfassend den Schritt des Setzens eines Flags, um zu kennzeichnen, dass eine Textur an den Mischpuffer bereitgestellt wurde.

9. Vorrichtung zum Ausführen von Texturier- und Mischoperationen an Objekten in einem dreidimensionalen grafischen Datenverarbeitungssystem, umfassend:

eine Bereitstellung (2) für Pixeldaten, die zu texturierende Objekte definieren;

eine Bereitstellung (6) für auf die Objekte anzuwendende Texturdaten;

einen Mischpuffer (32), um das bereitgestellte Pixel und die Texturdaten zu speichern;

einen Mischprozessor (8), um die Texturdaten auf jedes Pixel jedes Objekts anzuwenden, das Zugriff dazu hat;

Mittel, um die resultierenden Pixeldaten in einen Framepuffer zu schreiben;

**dadurch gekennzeichnet, dass**
die Bereitstellung (2) für Pixeldaten, die zu texturierende Objekte definieren, Mittel umfasst, um Polygone, welche die Objekte darstellen, die eine größere Kapazität erfordern würden als die des Mischpuffers, aufzuteilen, und Mittel zum Bereitstellen von Daten für mehr als ein Objekt an den Mischpuffer für Objekte, die kleiner sind als der Mischpuffer.

10. Vorrichtung nach Anspruch 9, wobei der Mischpuffer (32) und die Mischeinheit (8) auf einer integrierten Schaltung bereitgestellt sind, die vom IC getrennt ist, der den Framepuffer umfasst.

11. Vorrichtung nach Anspruch 9 oder 10, wobei die Mittel zum Bereitstellen von Texturdaten (6) Daten für mehrere unterschiedliche Texturen an den Mischpuffer (32) in einem einmaligen Schreibvorgang bereitstellen.

12. Vorrichtung nach Anspruch 9 oder 10 oder 11, wobei die Pixeldaten für zu texturierende Objekte Daten umfassen, die von Polygondaten abgeleitet sind.

13. Vorrichtung nach Anspruch 12, wobei der Mischprozessor (8) die Texturdaten auf jedes Pixel jedes Objekts mittels Polygonwandern anwendet.

14. Vorrichtung nach einem der Ansprüche 9 bis 13, wobei die Mittel, um die resultierenden Pixeldaten in den Framepuffer zu schreiben, ein einmaliges Schreiben für jedes Pixel ausführen.

15. Vorrichtung nach einem von Anspruch 9 bis 14, wobei die Mittel (2) zum Bereitstellen von Objektdaten an den Mischpuffer (32) Daten, die den Ort jedes Pixels im Mischpuffer und eine Anzahl von gleichzeitig zu verarbeitenden Pixeln definieren, bereitzustellen.

16. Vorrichtung nach einem der Ansprüche 9 bis 15, wobei die Mittel zum Bereitstellen von Objektdaten und Texturdaten an den Mischpuffer Daten, welche die Anzahl an Texturen definieren, auf die jedes Pixel Zugriff hat, bereitstellen.

**17.** Vorrichtung nach einem der Ansprüche 9 bis 16, umfassend Mittel zum Setzen eines Flags, um zu kennzeichnen, dass eine Textur an den Mischpuffer bereitgestellt wurde.

**Revendications**

**1.** Procédé pour effectuer des opérations de texturation et de mélanges sur des objets dans un système infographique à 3 dimensions comprenant les étapes de :

la fourniture de données pixel pour des objets à texturer ;
la fourniture des données de texture à appliquer aux pixel des objets ;
la fourniture des données d'objet et de texture à un tampon de mélange ;
l'application des données de texture à chaque pixel de chaque objet qui a accès à celles-ci en mélangeant les données d'objet et de texture dans un processeur de mélange ; et
l'écriture des données pixel résultantes dans une mémoire tampon de trame ;

**caractérisé en ce que** :

l'étape d'alimentation des données pixel comprend l'étape de sous-division des polygones représentant des objets dans l'image qui pourrait nécessiter une plus grande capacité que celle du tampon de mélange, et l'alimentation de données pour plus d'un objet simultanément au tampon de mélange pour des objets plus petits que le tampon de mélange.

**2.** Procédé selon la revendication 1, dans lequel des données de texture pour une pluralité de textures différentes sont fournies au tampon de mélange et sont ensuite appliquées à chaque pixel de chaque objet qui a accès à celles-ci.

**3.** Procédé selon la revendication 1 ou 2, dans lequel les données pixel pour des objets à texturer comprennent des données issues de données de polygone.

**4.** Procédé selon la revendication 3, dans lequel les données de texture sont appliquées à chaque pixel de chaque objet grâce au polygone qui se déplace.

**5.** Procédé selon une quelconque revendication précédente, dans lequel l'étape d'écriture à la mémoire tampon de trame comprend uniquement une seule écriture pour chaque pixel.

**6.** Procédé selon une quelconque revendication précédente, dans lequel l'étape d'alimentation de données d'objet au tampon de mélange comprend l'alimentation de données définissant la position de chaque pixel dans le tampon de mélange et le nombre de pixel à être traité simultanément.

**7.** Procédé selon une quelconque revendication précédente, dans lequel l'étape d'alimentation de données d'objet et de données de texture au tampon de mélange inclut l'alimentation de données définissant le nombre de textures auxquelles chaque pixel a accès.

**8.** Procédé selon une quelconque revendication précédente, incluant l'étape de mise en place d'un indicateur pour indiquer qu'une texture a été fournie au tampon de mélange.

**9.** Appareil pour effectuer des opérations de texturation et de mélanges sur des objets dans un système infographique à 3 dimensions comprenant :

une alimentation (2) pour des données pixel définissant des objets devant être texturés ;
une alimentation (6) pour des données de texture devant être appliquées aux objets ;
un tampon de mélange (32) pour stocker le pixel fourni et des données de texture ;
un processeur de mélange (8) pour appliquer les données de texture à chaque pixel de chaque objet qui a accès à celles-ci ;
des moyens pour écrire les données pixel résultantes à une mémoire tampon de trame ;

**caractérisé en ce que** :

l'alimentation (2) pour des données pixel définissant des objets devant être texturés inclut des moyens pour la sous-division de polygones représentant les objets qui nécessiteraient une plus grande capacité que celle du tampon de mélange, et des moyens pour fournir des données pour plus d'un objet au tampon de mélange pour des objets plus petits que le tampon de mélange.

**10.** Appareil selon la revendication 9, dans lequel le tampon de mélange (32) et l'unité de mélange (8) sont fournis sur un circuit intégré distinct du CI qui inclut la mémoire tampon de trame.

**11.** Appareil selon la revendication 9 ou 10, dans lequel les moyens pour fournir des données de texture (6) fournissent des données pour une pluralité de textures différentes au tampon de mélange (32) dans une seule et unique écriture.

**12.** Appareil selon la revendication 9, 10 ou 11, dans lequel les données pixel pour des objets à texturer comprennent des données issues de données de polygone.

13. Appareil selon la revendication 12, dans lequel le processeur de mélange (8) applique les données de texture à chaque pixel de chaque objet grâce au polygone qui se déplace.

14. Appareil selon l'une quelconque des revendications 9 à 13, dans lequel les moyens pour écrire les données pixel résultantes a la mémoire tampon de trame effectuent une seule et unique écriture pour chaque pixel.

15. Appareil selon l'une quelconque des revendications 9 à 14, dans lequel les moyens (2) pour fournir des données d'objet au tampon de mélange (32) fournissent des données définissant la position de chaque pixel dans le tampon de mélange et un nombre de pixel à être traité simultanément.

16. Appareil selon l'une quelconque des revendications 9 à 15, dans lequel les moyens pour fournir des données d'objet et des données de texture au tampon de mélange fournissent des données définissant le nombre de textures auxquelles chaque pixel a accès.

17. Appareil selon l'une quelconque des revendications 9 à 16, incluant des moyens pour mettre en place un indicateur pour indiquer qu'une texture a été fournie au tampon de mélange.

2 — Iterate texture coordinates

4 — Texture read ← Texture cache — 6 ← Frame buffer

8 — Blend operation
rd-modify-wr

10 — Optional cache
To frame buffer

# FIG. 1

(PRIOR ART)

2 — Iterate texture coordinates, split large polygons or combine small polygons

Calculate tex. coords. — 40

Texture read ← Texture cache — 6 ← Frame buffer

4

Write ports — 34
Blend buffer — 32
Read port(s) — 36

Y

X

Blend operations — 8

To frame buffer
(write once)

# FIG. 3

FIG. 2A

FIG. 2B

(PRIOR ART)

Blend buffer of depth n:

Word (a.k.a. address) 0
Word 1
Word 2
⋮
Word n-2
Word n-1

Word data format (for m registers):

| Screen position -(x, y) | Register r0 | Register r1 | Register r2 | . . . | Register r(m-2) | Register r(m-1) |
|---|---|---|---|---|---|---|

Single register data format (for q pixel pipes):

| Pixel pipeline 0 | Pixel pipeline 1 | Pixel pipeline 2 | . . . | Pixel pipeline q-2 | Pixel pipeline q-1 |
|---|---|---|---|---|---|

Single register, single pipe data format (4 channels):

| Alpha ($k_1$ bits) | Red ($k_1$ bits) | Green ($k_1$ bits) | Blue ($k_1$ bits) |
|---|---|---|---|

# FIG. 4

$(x, y) = (9, 5)$
$(u, v) = (0.79, 0.03)$

$(x, y) = (3, 17)$
$(u, v) = (0.15, 0.87)$

$(x, y) = (20, 17)$
$(u, v) = (0.75, 0.32)$

# FIG. 5

(PRIOR ART)

12

Iterate pass 0
(all pixels)

↓

Iterate pass 1
(all pixels)

↓

Iterate pass 2
(all pixels)

⋮

Iterate pass 3
(all pixels)

Next triangle

Flow A
"huge" blend buffer

Iterate pass 0
(1st 64 pixels)

↓

Iterate pass 1
(1st 64 pixels)

⋮

Iterate last pass
(1st 64 pixels)

↓

Iterate pass 0
(next 64 pixels)

↓

Iterate pass 1
(next 64 pixels)

⋮

Iterate last pass
(next 64 pixels)

↓

Iterate pass 0
(last 20 pixels)

↓

Iterate pass 1
(last 20 pixels)

⋮

Iterate last pass
(last 20 pixels)

Next triangle

Flow B
blend buffer size = 64 pixels
triangle size = 148 pixels

Iterate pass 0
(1st triangle)

↓

Iterate pass 0
(2nd triangle)

⋮

Iterate pass 0
(4th triangle)

↓

Iterate pass 1
(1st triangle)

↓

Iterate pass 1
(2nd triangle)

⋮

Iterate pass 1
(4th triangle)

↓

Iterate last pass
(I1st triangle)

↓

Iterate last pass
(2nd triangle)

⋮

Iterate last pass
(4th triangle)

Next triangle(s)

Flow C
blend buffer size = 64 pixels
4 triangles, each 12 pixels
(all triangles share same state)

# FIG. 6

13

FIG. 7

**EP 1 461 776 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0725365 A1
- GB 2297886 A

- EP 0890925 A2